# FASCICULE DE BREVET EUROPEEN

(11) **EP 3 362 304 B1**
(45) Date de publication et mention de la délivrance du brevet: **10.07.2019**
(21) Numéro de dépôt: 16790635.3
(22) Date de dépôt: 27.09.2016
(51) Int. Cl.: B60G 7/00, B60G 21/05

(54) **AGENCEMENT POUR LA LIAISON D'UN PORTE FUSÉE À UN ÉLÉMENT DE STRUCTURE DE VÉHICULE AUTOMOBILE**
ANORDNUNG ZUR VERBINDUNG EINES ACHSSCHENKELS MIT EINEM STRUKTURELEMENT EINES KRAFTFAHRZEUGS
ARRANGEMENT FOR THE CONNECTION OF A STEERING KNUCKLE TO A STRUCTURAL ELEMENT OF A MOTOR VEHICLE

(30) Priorité: 15.10.2015 FR 1559799
(43) Date de publication de la demande: 22.08.2018
(73) Titulaire: Renault S.A.S., 92100 Boulogne-Billancourt (FR)
(72) Inventeur: ROLLET, Remi, 91190 Gif Sur Yvette (FR); LE-BASSER, Yann, 72530 Yvre L'eveque (FR)
(86) Numéro de dépôt international: PCT/FR2016/052446
(87) Numéro de publication internationale: WO 2017/064382

(56) Documents cités:
- EP-A1- 0 538 116
- FR-A1- 2 698 046
- US-B1- 6 641 229

## Description

### DOMAINE TECHNIQUE DE L'INVENTION

La présente invention concerne le domaine des véhicules automobiles et, notamment les dispositifs de liaison d'une roue à la structure du véhicule. Plus particulièrement, l'invention concerne un agencement pour la liaison d'un porte-fusée à un élément de structure de véhicule automobile comportant :
- un porte-fusée de roue monté pivotant sur l'élément de structure autour d'un premier axe transversal ;
- un moyen de filtration qui limite le pivotement du porte-fusée dans les deux sens et qui comporte :
   - une bague extérieure d'axe transversal décalé verticalement par rapport au premier axe, la bague extérieure étant logée dans le porte-fusée en vis-à-vis de l'élément de structure ;
   - une armature intérieure s'étendant selon un axe transversal coaxial à l'axe de la bague extérieure,
   - un organe annulaire de filtration qui est intercalé radialement entre une portion d'articulation de l'armature intérieure et la bague extérieure ;
   - l'armature intérieure comportant un tronçon sensiblement cylindrique de portée qui s'étend au moins en partie concentriquement à l'intérieur de l'organe de filtration et qui s'étend transversalement jusqu'à l'élément de structure en présentant une section radiale de dimensions sensiblement constantes ;
- des moyens de fixation par serrage transversal de l'armature intérieure contre l'élément de structure.

### ARRIERE PLAN TECHNIQUE DE L'INVENTION

Généralement, un véhicule automobile comprend une caisse, des roues reposant sur le sol et un essieu liant la caisse aux roues. Cet essieu comprend pour chaque roue un porte-fusée de roue sur lequel ladite roue est montée à rotation autour d'un axe transversal ayant une extrémité filetée, appelé « fusée de roue ».

L'essieu comprend également un bras sensiblement longitudinal lié à la caisse par une première extrémité et des moyens de liaison du porte fusée à une seconde extrémité du bras opposée à la première extrémité, et une traverse déformable sensiblement transversale solidaire des bras respectifs des deux roues.

Lorsque la roue rencontre un obstacle sur le sol, cette roue subit un effort ayant une composante verticale et une composante longitudinale. Cet obstacle peut être une irrégularité du sol, une pierre, un trou ou tout autre objet ou formation en saillie ou en creux par rapport au sol. La composante verticale est amortie par la suspension du véhicule avant d'être transmise à la caisse et est donc peu ressentie par les passagers. La composante longitudinale n'est en revanche pas amortie par la suspension et est ressentie comme un choc par les passagers du véhicule.

Il est connu de prévoir que l'essieu permette un déplacement longitudinal du centre de roue lorsque la roue rencontre un obstacle, de façon à améliorer le confort des passagers. Dans ce but, on choisit un essieu dont la cinématique impose au centre de roue, en cas d'obstacle, un mouvement de rotation autour d'un axe transversal situé proche du point de contact entre la roue et le sol. On peut se référer au document FR-A-2.972.389 qui décrit un véhicule automobile muni de moyens de guidage de chaque porte fusée en déplacement sur une trajectoire longitudinale. Le porte-fusée est monté pivotant autour d'un axe transversal par l'intermédiaire d'une liaison pivot. Le débattement en pivotement dans les deux sens est limité et amorti par l'intermédiaire d'une liaison hydroélastique.

La liaison hydroélastique comporte une armature intérieure cylindrique qui est fixée à un élément de structure du véhicule par l'intermédiaire d'une vis. L'armature intérieure présente plus particulièrement une forme cylindrique qui s'étend jusqu'à une face plane et orthogonale de l'élément de structure. L'armature comporte un épaulement qui permet son appui plan contre ladite face de l'élément de structure.

Cependant, dans ce mode de réalisation, la quasi-totalité des efforts de flexion appliqués à l'armature intérieure transitent par la vis. Or, on a constaté que la vis était susceptible de rompre sous l'effet de certains chocs.

Pour résoudre ce problème, on a proposé d'augmenter le diamètre de la vis. Cependant, il n'est pas possible d'augmenter suffisamment le diamètre de la vis pour résister aux efforts de flexion qui sont susceptibles de lui être appliqués.

### BREF RESUME DE L'INVENTION

L'invention propose un agencement du type décrit précédemment, caractérisé en ce que l'armature intérieure présente un tronçon d'encastrement de forme sensiblement tronconique qui s'étend depuis une extrémité large qui prolonge le tronçon de portée jusqu'à une extrémité étroite, le tronçon d'encastrement étant reçu transversalement dans un logement complémentaire de l'élément de structure contre la paroi interne duquel le tronçon d'encastrement est serré transversalement par les moyens de fixation.

Selon d'autres caractéristiques de l'invention :
- l'extrémité large du tronçon d'encastrement présente une section radiale sensiblement identique à celle du tronçon de portée ;
- le tronçon de portée présente une section de contour sensiblement circulaire présentant le plus grand diamètre de la portion d'articulation de l'armature intérieure ;
- le tronçon de portée s'étend au moins sur un tiers de la longueur transversale de la portion d'articulation de l'armature intérieure ;
- les moyens de fixation sont formés par une tige filetée qui est reçue dans un orifice traversant qui est réalisé au fond du logement de l'élément de structure et qui est coaxial à l'axe du tronçon d'encastrement ;
- la tige filetée appartient à une vis qui est vissée dans un taraudage transversal central du tronçon d'encastrement qui débouche dans l'extrémité étroite, une tête étant en appui contre une face de l'élément de structure opposée au logement ;
- la tige filetée prolonge coaxialement l'extrémité étroite du tronçon d'encastrement, un écrou étant reçu à l'extrémité libre de la tige filetée et serré en appui contre une face de l'élément de structure opposée au logement ;
- la tige filetée est réalisée en une pièce avec l'armature intérieure.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de face d'un dispositif de liaison selon l'invention ;
- la figure 2 est une vue en coupe d'un dispositif de liaison selon la figure 1 monté entre un moyeu de roue et la structure d'un véhicule automobile ;
- la figure 3 est une vue de détail à plus grande échelle qui représente l'agencement pour la fixation de l'articulation hydroélastique sur un élément de structure du véhicule ;
- la figure 4 est une vue schématique en perspective d'un dispositif de liaison selon la figure 1 monté sur la structure d'un véhicule.

### DESCRIPTION DETAILLEE DES FIGURES

Dans la suite de la description, des éléments présentant une structure identique ou des fonctions analogues seront désignés par des mêmes références.

Dans la suite de la description, on adoptera à titre non limitatif les orientations suivantes :
- longitudinale, indiquée par la référence "L", et dirigée d'arrière en avant selon le sens de déplacement du véhicule ;
- verticale, indiquée par la référence "V" et orientée de bas en haut selon une direction orthogonale à la route ;
- transversale, indiquée par la référence "T" et orientée de gauche à droite selon l'axe de rotation des roues du véhicules.

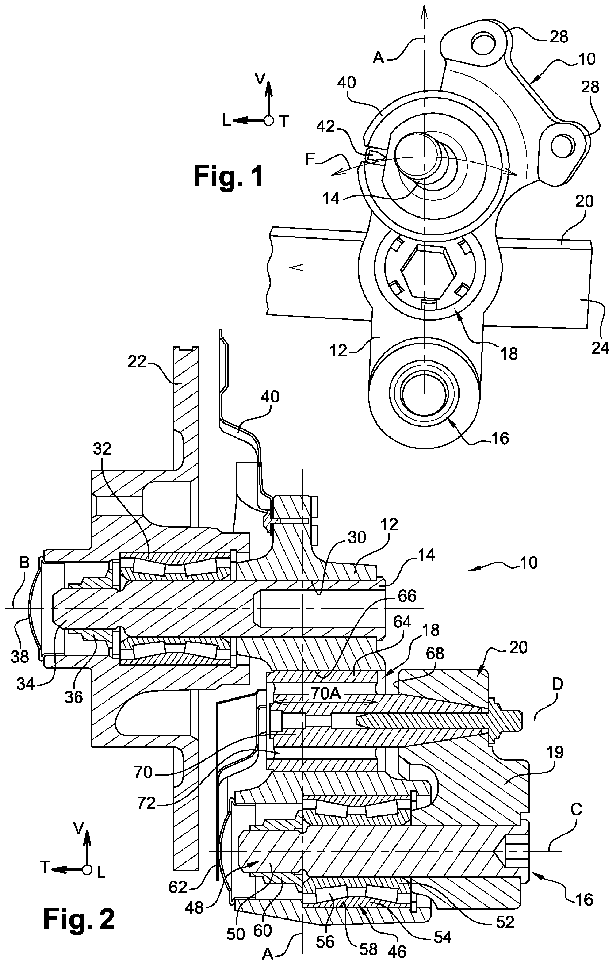

On a représenté aux figures 1 à 4 un agencement 10 pour la liaison d'une roue à un véhicule automobile (non représenté). Cet agencement 10 comprend un porte-fusée 12 de roue supportant une fusée 14 de roue et deux moyens de liaison 16, 18 à un élément 20 de structure du véhicule. La fusée 14 de roue et les deux moyens de liaison 16, 18 sont disposés sur un même axe sensiblement vertical "A", perpendiculaire à l'axe longitudinal "L" du véhicule.

Tel qu'illustré sur la figure 2, l'agencement 10 est destiné à relier une roue (non représentée) par l'intermédiaire d'un moyeu 22 de roue à un élément 19 de structure d'un véhicule automobile.

L'élément 19 de structure est par exemple un plateau qui est fixé à un essieu 20 du véhicule. L'essieu 20 comprend un bras 24 sensiblement longitudinal lié à la caisse du véhicule (non représentée) par une première extrémité et à l'agencement 10 de liaison par une deuxième extrémité, opposée à la première extrémité. L'essieu 20 comporte également une traverse transversale déformable 26 solidaire des bras 24 respectifs de deux roues. L'élément 19 de structure est plus particulièrement fixé à l'un des bras 24.

Le porte-fusée 12 de roue, la fusée 14 de roue et les deux moyens de liaison 16, 18 forment un unique sous ensemble destiné à être monté sur l'élément 19 de structure du véhicule.

Le plateau fusée pourrait en variante faire partie de ce sous ensemble. Toutefois, on pourrait envisager une fixation du porte-fusée directement sur l'essieu.

Le porte-fusée 12 de roue comprend aussi des ailettes 28 situées en partie supérieure du porte-fusée 12 de roue assurant la fixation d'étriers de frein (non représentés).

La fusée 14 de roue, d'axe transversal "B", est un arbre de forme fuselée, inséré dans un alésage 30 du porte-fusée 12 de roue. La fusée 14 de roue supporte des roulements à rouleaux coniques 32 du moyeu 22 de roue et présente une extrémité filetée 34 coopérant avec un écrou de réglage 36 destiné à régler le roulement à rouleaux coniques 32. La fusée de roue 14 vient donc s'insérer dans l'alésage 30 du moyeu 22 de roue et la roue (non représentée) est ainsi montée à rotation sur la fusée 14 de roue.

Un capot 38 de protection peut être disposé à une extrémité de l'alésage 30 du moyeu 22 de roue afin d'éviter la pénétration de polluants dans l'alésage 30 et dans le roulement à rouleaux coniques 32.

Tel qu'illustré sur les figures 1 à 4, un support de capteur 40, d'axe "B", est disposé sur le porte-fusée 12 de roue. Le support de capteur 40, de forme générale circulaire, comprend une encoche 42 destinée à coopérer avec un capteur 44 de rotation de la roue.

Le porte-fusée 12 de roue est monté pivotant sur l'élément 19 de structure autour d'un axe "C" transversal par l'intermédiaire du premier moyen de liaison 16. L'axe "C" de pivotement est parallèle à l'axe "A" de rotation de la roue. La liaison pivot est réalisée par un roulement 46, tel que par exemple un roulement à rouleaux coniques supporté par un arbre transversal 48 présentant une extrémité filetée 50. Le roulement 46 à rouleaux coniques comprend une bague 52 intérieure, une bague 54 extérieure et une ou deux rangées de rouleaux 56 coniques disposées entre les bagues 52, 54. La bague extérieure 54 est montée serrée dans un alésage 58, d'axe "C", du porte-fusée 12 de roue, de sorte que le porte-fusée 12 de roue pivote autour de l'axe "C". L'extrémité filetée 50 de l'arbre transversal 48 coopère avec un écrou 60 et permet d'assurer une fixation sur l'élément 20 de structure. Un capot 62 de protection peut être disposé à une extrémité de l'alésage 58 du porte-fusée 12 afin d'éviter la pénétration de polluants dans le roulement à rouleaux coniques 46.

En variante, on pourrait envisager l'utilisation d'un roulement à double rangée de billes.

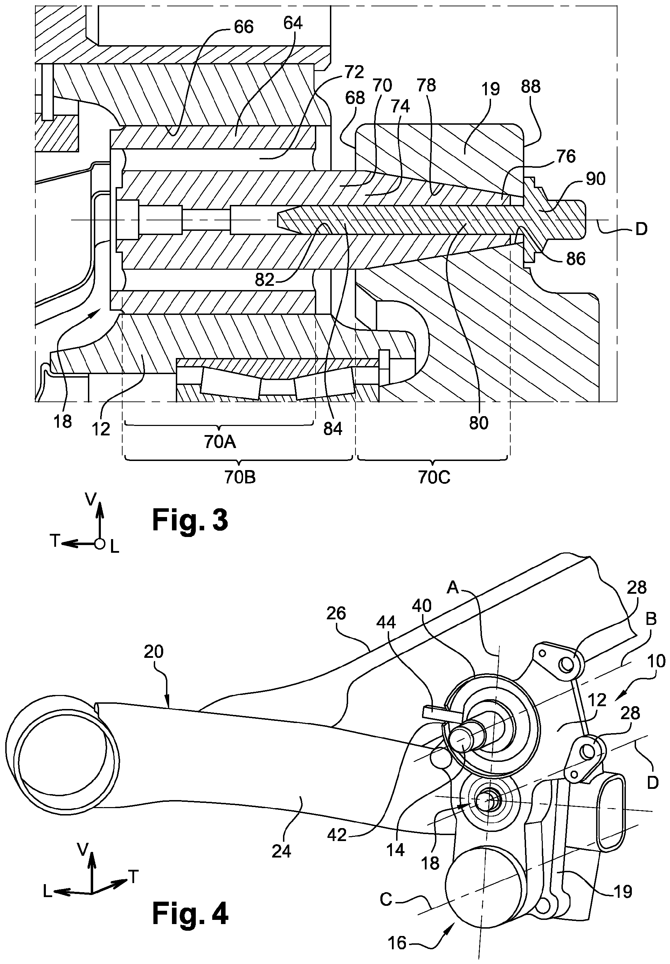

Comme illustré plus en détails à la figure 3, l'agencement 10 comporte aussi un moyen de filtration qui limite dans les deux sens le pivotement du porte-fusée 12 autour de son axe "C". Le moyen de filtration est formé par le deuxième moyen de liaison 18. Le moyen de filtration permet ainsi de rappeler élastiquement le porte-fusée 12 vers une position angulaire intermédiaire de repos tout en filtrant les vibrations provoquées par le roulement des roues sur la route.

Le moyen de filtration est formé par une articulation 63 hydroélastique d'axe transversal "D". Il comporte une bague 64 extérieure d'axe "D" transversal décalé verticalement par rapport à l'axe "C" de pivotement du porte-fusée 12. La bague 64 extérieure est montée serrée dans un alésage 66 du porte-fusée 12. Cet alésage 66 débouche transversalement en vis-à-vis d'une face 68 verticale longitudinale de l'élément 19 de structure, dite face 68 proximale, tournée vers la roue.

L'articulation 63 hydroélastique comporte aussi une armature 70 intérieure réalisée en une pièce. L'armature présente la forme d'un arbre s'étendant selon l'axe "D" transversal coaxialement à l'axe de la bague 64 extérieure. Cette armature 70 intérieure s'étend en partie concentriquement à l'intérieur de la bague 64 extérieure.

Un organe 72 annulaire de filtration, ici un organe hydroélastique, est intercalé radialement entre une portion 70A d'articulation de l'armature 70 intérieure et la bague 64 extérieure.

Selon un exemple non limitatif et non représenté, l'organe 72 de filtration comporte par exemple un élément élastique et une poche dans laquelle qui contient un liquide amortisseur et un élément saturateur. Le liquide amortisseur est, par exemple, du glycol afin d'obtenir un effet amortisseur suffisant.

En variante non représentée de l'invention, le moyen de filtration est formé par une articulation élastique. Dans ce cas, l'organe de filtration est un organe élastique.

L'armature 70 intérieure comportant un tronçon 70B sensiblement cylindrique de portée qui s'étend au moins en partie concentriquement à l'intérieur de l'organe 72 de filtration. Ce tronçon 70B de portée s'étend transversalement jusqu'à la face 68 proximale de l'élément 19 de structure. Le tronçon 70B de portée présente une section radiale de dimensions sensiblement constantes. Plus particulièrement, ce tronçon 70B de portée présente une forme sensiblement cylindrique de révolution.

Le tronçon 70B de portée chevauche ainsi en partie la portion 70A d'articulation de l'armature 70 intérieure. De préférence, le tronçon 70B de portée s'étend sur au moins un tiers de la longueur transversale de la portion 70A d'articulation de l'armature 70 intérieure. Ainsi, l'armature 70 intérieure est susceptible de pivoter uniquement autour de l'axe "D" transversal par rapport à l'organe 72 de filtration.

Le tronçon 70B de portée présente plus particulièrement une section de contour sensiblement circulaire présentant le plus grand diamètre de la portion 70A d'articulation de l'armature 70 intérieure.

L'armature 70 interne présente en outre un tronçon 70C d'encastrement qui prolonge directement le tronçon 70B de portée transversalement vers l'élément 19 de structure. Le tronçon 70C d'encastrement présente une forme sensiblement tronconique qui s'étend depuis une extrémité 74 large qui est agencée à l'extrémité du tronçon 70B de portée jusqu'à une extrémité 76 étroite.

L'extrémité 74 large du tronçon 70C d'encastrement présente une section radiale sensiblement identique à celle du tronçon 70B de portée. De ce fait, l'armature 70 intérieure ne présente pas d'épaulement à la frontière entre le tronçon 70C d'encastrement et le tronçon 70B de portée.

Ce tronçon 70C d'encastrement est reçu transversalement dans un logement 78 de forme complémentaire qui est réalisé dans la face 68 proximale de l'élément 19 de structure. Le logement 78 est ainsi délimité par une paroi de forme tronconique.

Le tronçon 70C d'encastrement est serré transversalement par des moyens de fixation contre la paroi interne du logement 78. Ceci permet de réaliser une fixation rigide et très résistante du moyen 18 de filtration sur l'élément 19 de structure.

Les moyens de fixation sont formés par une vis 80 d'axe transversal qui est vissée dans un taraudage 82 transversal central du tronçon 70C d'encastrement qui débouche dans l'extrémité 76 étroite. La tige 84 filetée de la vis 80 est insérée dans un orifice 86 traversant qui est réalisé au fond du logement 78 de l'élément 19 de structure. Cet orifice 86 est qui est coaxial à l'axe "D" du tronçon d'encastrement de l'armature 70. L'orifice 86 est débouchant dans une face 88 verticale longitudinale opposée au logement 86 de l'élément 19 de structure, dite face 88 distale. Une tête 90 de la vis 80 est serrée contre la face 88 distale afin de serrer, en réaction, le tronçon 70C d'encastrement contre la paroi interne du logement 78.

En variante non représentée de l'invention, les moyens de fixation sont formés par une tige filetée qui prolonge coaxialement l'extrémité étroite du tronçon d'encastrement. Cette tige filetée est par exemple réalisée venue de matière avec l'armature intérieure ou vissée dans un taraudage central. La tige filetée est insérée dans l'orifice réalisé au fond du logement. La portion de tige filetée dépassant de la face distale de l'élément de structure reçoit un écrou qui procure l'effet de serrage du tronçon d'encastrement contre la paroi interne du logement.

Le moyen de filtration 18 est disposé entre la fusée 14 de roue et le premier moyen de liaison 16, de manière à faire pivoter le porte-fusée 12 de roue autour de l'axe transversal "C" et à le guider en déplacement sur une trajectoire courbe longitudinale suivant la flèche F illustrée à la figure 1, sensiblement suivant la direction longitudinale "L", en cas de présence d'un obstacle sur le sol. En effet, lorsque la roue rencontre un obstacle sur le sol, cette roue subit un effort ayant une composante longitudinale et verticale. La composante longitudinale, suivant l'axe "L", s'applique directement à la fusée 14 de roue, et engendre un déplacement de la roue. Ce déplacement de la roue est appelé « recul de roue ». Le recul de roue, en cas d'obstacle permet de diminuer les efforts transmis au train de roue du véhicule. Grâce à la liaison pivot 16, qui autorise la rotation du porte-fusée 12 de roue suivant l'axe "C", le déplacement de la fusée 14 de roue présente un mouvement oscillatoire dont la trajectoire est un arc de cercle suivant la flèche F, centré sur l'axe transversal "C" du moyen 18 de filtration. Plus l'axe transversal "C" est proche du point de contact de la roue sur le sol, plus cette trajectoire sera proche d'une trajectoire purement longitudinale suivant l'axe "L". Le roulement 46 de la liaison pivot 16 permet de bloquer les translations suivants tous les axes "L", "V", "T", ainsi que les rotations suivant les axes "L" et "V", permettant ainsi de régler le carrossage des roues. Le carrossage est l'angle entre la roue et le plan perpendiculaire au sol, suivant l'axe "V". Le réglage du carrossage permet d'obtenir une usure uniforme du pneu.

La rotation du porte-fusée 12 de roue suivant l'axe "C" est autorisée par la liaison pivot 16 mais son débattement est limité par le moyen de filtration 18, par exemple d'une amplitude d'environ 10 mm, ce qui permet de maitriser le recul de roue. De ce fait, l'armature 70 intérieure travaille uniquement en translation selon une trajectoire orthogonale à la direction transversale "T" par rapport à la bague 64 extérieure. L'armature 70 intérieure ne subit sensiblement aucun mouvement de pivotement par rapport à la bague 64 extérieure.

L'armature 72 interne absorbe sensiblement la totalité de l'effort de flexion appliqué par la roue lors d'un choc.

L'encastrement de l'armature 70 intérieure dans le logement 78 de l'élément de structure 19 réalisé conformément à l'agencement de l'invention permet avantageusement de présenter une grande résistance à la rupture du fait de la forme du tronçon d'encastrement et de la forme du tronçon de portée. Le diamètre important du tronçon de portée et l'absence de formes susceptibles de favoriser la concentration de contraintes, tels que des épaulements, à la frontière entre ces deux tronçons permet d'améliorer la résistance à la rupture de l'agencement.

En outre, la forme tronconique de l'élément d'encastrement permet de faciliter l'insertion du tronçon d'encastrement dans le logement, tout en garantissant une grande surface de contact pour le serrage transversal de l'armature intérieure contre le logement. Ceci permet notamment de favoriser une grande rigidité de la liaison entre l'armature intérieure et l'élément de structure.

Ceci permet aussi de garantir un transfert de la majorité des efforts de flexion directement entre l'armature intérieure et l'élément de structure. La tige filetée de la vis est ainsi peu sollicitée en flexion.

De plus, le dispositif de liaison est facile à mettre en place dans la mesure où il constitue un sous ensemble monté au préalable. Un tel sous ensemble est de ce fait adaptable à tous les types d'essieu.

## Revendications

1. Agencement (10) pour la liaison d'un porte-fusée (12) à un élément (19) de structure de véhicule automobile comportant :
- un porte-fusée (12) de roue monté pivotant sur l'élément (19) de structure autour d'un premier axe (C) transversal ;
- un moyen (18) de filtration qui limite le pivotement du porte-fusée (12) dans les deux sens et qui comporte :
- une bague (64) extérieure d'axe (D) transversal décalé verticalement par rapport au premier axe (C), la bague (64) extérieure étant logée dans le porte-fusée (12) en vis-à-vis de l'élément (19) de structure ;
- une armature (70) intérieure s'étendant selon un axe (D) transversal coaxial à l'axe de la bague (64) extérieure,
- un organe (72) annulaire de filtration qui est intercalé radialement entre une portion (70A) d'articulation de l'armature (70) intérieure et la bague (64) extérieure ;
- l'armature (70) intérieure comportant un tronçon (70B) sensiblement cylindrique de portée qui s'étend au moins en partie concentriquement à l'intérieur de l'organe (72) de filtration et qui s'étend transversalement jusqu'à l'élément (19) de structure en présentant une section radiale de dimensions sensiblement constantes ;
- des moyens (80) de fixation par serrage transversal de l'armature (70) intérieure contre l'élément (19) de structure ;
**caractérisé en ce que** l'armature (70) intérieure présente un tronçon (70C) d'encastrement de forme sensiblement tronconique qui s'étend depuis une extrémité (74) large qui prolonge le tronçon (70B) de portée jusqu'à une extrémité (76) étroite, le tronçon (70C) d'encastrement étant reçu transversalement dans un logement (78) complémentaire de l'élément (19) de structure contre la paroi interne duquel le tronçon (70C) d'encastrement est serré transversalement par les moyens (80) de fixation.

2. Agencement selon la revendication précédente, **caractérisé en ce que** l'extrémité (74) large du tronçon d'encastrement présente une section radiale sensiblement identique à celle du tronçon (70B) de portée.

3. Agencement selon l'une quelconque des revendications précédentes, **caractérisé en ce que** le tronçon (70B) de portée présente une section de contour sensiblement circulaire présentant le plus grand diamètre de la portion (70A) d'articulation de l'armature (70) intérieure.

4. Agencement selon l'une quelconque des revendications précédentes, **caractérisé en ce que** le tronçon (70B) de portée s'étend au moins sur un tiers de la longueur transversale de la portion (70A) d'articulation de l'armature (70) intérieure.

5. Agencement selon l'une quelconque des revendications précédentes, **caractérisé en ce que** les moyens de fixation sont formés par une tige (84) filetée qui est reçue dans un orifice (86) traversant qui est réalisé au fond du logement (78) de l'élément (19) de structure et qui est coaxial à l'axe (D) du tronçon (70C) d'encastrement.

6. Agencement selon la revendication précédente, **caractérisé en ce que** la tige (84) filetée appartient à une vis (80) qui est vissée dans un taraudage (82) transversal central du tronçon (70C) d'encastrement qui débouche dans l'extrémité (76) étroite, une tête (90) étant en appui contre une face (88) de l'élément (19) de structure opposée au logement.

7. Agencement selon la revendication 5, **caractérisé en ce que** la tige filetée prolonge coaxialement l'extrémité étroite du tronçon d'encastrement, un écrou étant reçu à l'extrémité libre de la tige filetée et serré en appui contre une face de l'élément de structure opposée au logement.

8. Agencement selon la revendication précédente, **caractérisé en ce que** la tige filetée est réalisée en une pièce avec l'armature intérieure.

## Patentansprüche

1. Anordnung (10) zur Verbindung eines Achsschenkelträgers (12) mit einem Strukturelement (19) eines Kraftfahrzeugs, die aufweist:
- einen Achsschenkelträger (12) eines Rads, der um eine erste Querachse (C) schwenkend auf das Strukturelement (19) montiert ist;
- eine Filtereinrichtung (18), die das Schwenken des Achsschenkelträgers (12) in beiden Richtungen begrenzt und aufweist:
- einen äußeren Ring (64) mit einer bezüglich der ersten Achse (C) senkrecht versetzten Querachse (D), wobei der äußere Ring (64) im Achsschenkelträger (12) gegenüber dem Strukturelement (19) untergebracht ist;
- eine innere Armierung (70), die sich gemäß einer Querachse (D) koaxial zur Achse des äußeren Rings (64) erstreckt,
- ein ringförmiges Filterorgan (72), das radial zwischen einen Gelenkteil (70A) der inneren Armierung (70) und den äußeren Ring (64) eingefügt ist;
- wobei die innere Armierung (70) einen im Wesentlichen zylindrischen Auflagerabschnitt (70B) aufweist, der sich zumindest zum Teil konzentrisch im Inneren des Filterorgans (72) erstreckt und sich quer bis zum Strukturelement (19) erstreckt, indem er einen Radialschnitt mit im Wesentlichen konstanten Abmessungen aufweist;
- Einrichtungen (80) zur Befestigung durch Quereinspannen der inneren Armierung (70) gegen das Strukturelement (19);
**dadurch gekennzeichnet, dass** die innere Armierung (70) einen Einbettungsteil (70C) von im Wesentlichen Kegelstumpfform aufweist, der sich von einem breiten Ende (74), das den Auflagerteil (70B) verlängert, bis zu einem schmalen Ende (76) erstreckt, wobei der Einbettungsabschnitt (70C) quer in einer komplementären Aufnahme (78) des Strukturelements (19) aufgenommen wird, gegen deren Innenwand der Einbettungsabschnitt (70C) durch die Befestigungseinrichtungen (80) quer eingespannt wird.

2. Anordnung nach dem vorhergehenden Anspruch, **dadurch gekennzeichnet, dass** das breite Ende (74) des Einbettungsabschnitts einen Radialschnitt im Wesentlichen gleich demjenigen des Auflagerabschnitts (70B) aufweist.

3. Anordnung nach einem der vorhergehenden Ansprüche, **dadurch gekennzeichnet, dass** der Auflagerabschnitt (70B) einen im Wesentlichen kreisförmigen Umrissschnitt aufweist, der den größten Durchmesser des Gelenkteils (70A) der inneren Armierung (70) aufweist.

4. Anordnung nach einem der vorhergehenden Ansprüche, **dadurch gekennzeichnet, dass** der Auflagerabschnitt (70B) sich über mindestens ein Drittel der Querlänge des Gelenkteils (70A) der inneren Armierung (70) erstreckt.

5. Anordnung nach einem der vorhergehenden Ansprüche, **dadurch gekennzeichnet, dass** die Befestigungseinrichtungen von einer Gewindestange (84) gebildet werden, die in einer Durchgangsöffnung (86) aufgenommen wird, die am Boden der Aufnahme (78) des Strukturelements (19) hergestellt und koaxial zur Achse (D) des Einbettungsabschnitts (70C) ist.

6. Anordnung nach dem vorhergehenden Anspruch, **dadurch gekennzeichnet, dass** die Gewindestange (84) zu einer Schraube (80) gehört, die in ein zentrales Querinnengewinde (82) des Einbettungsabschnitts (70C) geschraubt wird, das am schmalen Ende (76) mündet, wobei ein Kopf (90) gegen eine der Aufnahme entgegengesetzte Seite (88) des Strukturelements (19) aufliegt.

7. Anordnung nach Anspruch 5, **dadurch gekennzeichnet, dass** die Gewindestange das schmale Ende des Einbettungsabschnitts koaxial verlängert, wobei eine Mutter am freien Ende der Gewindestange aufgenommen und in Auflage gegen eine der Aufnahme entgegengesetzte Seite des Strukturelements eingespannt wird.

8. Anordnung nach dem vorhergehenden Anspruch, **dadurch gekennzeichnet, dass** die Gewindestange aus einem Stück mit dem inneren Armierung hergestellt wird.

## Claims

1. Arrangement (10) for the connection of a steering knuckle (12) to a structural element (19) of a motor vehicle, comprising:
- a steering knuckle (12) mounted pivotably on the structural element (19) about a first transverse axis (C) ;
- a filter means (18) that limits the pivoting of the steering knuckle (12) in the two directions, and which comprises:
- an outer ring (64) of transverse axis (D) offset vertically relative to the first axis (C), the outer ring (64) being accommodated in the steering knuckle (12) opposite the structural element (19);
- an inner framework (70) extending along a transverse axis (D) coaxial with the axis of the outer ring (64);
- an annular filter member (72) that is inserted radially between an articulation section (70A) of the inner framework (70) and the outer ring (64);
- the inner framework (70) including a substantially cylindrical bearing section (70B) that extends at least in part concentrically inside the filter member (72) and extends transversely as far as the structural element (19), having a radial cross section of substantially constant dimensions;
- means (80) for fastening, by transverse clamping, the inner framework (70) against the structural element (19);
**characterized in that** the inner framework (70) has a substantially frustoconical embedding section (70C) that extends from a wide end (74) that extends the bearing section (70B) as far as a narrow end (76), the embedding section (70C) being received transversely in a complementary housing (78) of the structural element (19) against the inner wall of which the embedding section (70C) is transversely clamped by the fastening means (80) .

2. Arrangement according to the preceding claim, **characterized in that** the wide end (74) of the embedding section has a radial cross section substantially identical to that of the bearing section (70B).

3. Arrangement according to either one of the preceding claims, **characterized in that** the bearing section (70B) has a cross section of substantially circular contour having the largest diameter of the articulation section (70A) of the inner framework (70).

4. Arrangement according to any one of the preceding claims, **characterized in that** the bearing section (70B) extends at least over one third of the transverse length of the articulation section (70A) of the inner framework (70) .

5. Arrangement according to any one of the preceding claims, **characterized in that** the fastening means are formed by a threaded rod (84) that is received in a through-orifice (86) that is made in the bottom of the housing (78) of the structural element (19) and is coaxial to the axis (D) of the embedding section (70C).

6. Arrangement according to the preceding claim, **characterized in that** the threaded rod (84) belongs to a screw (80) that is screwed into a central transverse threading (82) of the embedding section (70C) that opens at the narrow end (76), a head (90) bearing against a face (88) of the structural element (19) opposite the housing.

7. Arrangement according to Claim 5, **characterized in that** the threaded rod coaxially extends the narrow end of the embedding section, a nut being received at the free end of the threaded rod and clamped so as to bear against a face of the structural element opposite the housing.

8. Arrangement according to the preceding claim, **characterized in that** the threaded rod is made as a single component with the inner framework.
